# EUROPÄISCHE PATENTSCHRIFT

(11) **EP 3 549 662 B1**
(45) Veröffentlichungstag und Bekanntmachung des Hinweises auf die Patenterteilung: **04.11.2020**
(21) Anmeldenummer: 19166025.7
(22) Anmeldetag: 29.03.2019
(51) Int. Cl.: B01F 5/06, F01N 3/28, F01N 13/18, F16L 23/04

(54) **MISCHERBAUGRUPPE**
MIXER ASSEMBLY
MODULE MÉLANGEUR

(30) Priorität: 03.04.2018 DE 102018107768
(43) Veröffentlichungstag der Anmeldung: 09.10.2019
(73) Patentinhaber: Eberspächer Exhaust Technology GmbH & Co. KG, 66539 Neunkirchen (DE)
(72) Erfinder: Röhr, Benjamin, 73732 Esslingen (DE); Schwarz, Roland, 73732 Esslingen (DE); Gorke, Peter, 70327 Stuttgart (DE); Berkemer, Frank, 72800 Eningen u.A. (DE); Juroszek, Tadeusz-Jozef, 73669 Lichtenwald (DE)
(74) Vertreter: Ruttensperger Lachnit Trossin Gomoll

(56) Entgegenhaltungen:
- EP-A1- 2 474 721
- DE-A1-102013 201 402
- DE-U1-202012 011 764

## Beschreibung

Die vorliegende Erfindung betrifft eine Mischerbaugruppe, die in einer Abgasanlage einer Fahrzeugbrennkraftmaschine dazu eingesetzt werden kann, um in das aus einer Brennkraftmaschine ausgestoßene Abgas eingespritztes Reaktionsmittel mit dem Abgas zu vermischen.

Zur Verringerung des Schadstoffausstoßes insbesondere von DieselBrennkraftmaschinen in Kraftfahrzeugen ist es bekannt, Reaktionsmittel, wie zum Beispiel eine Harnstoff/Wasser-Lösung, in das von der Brennkraftmaschine ausgestoßene Abgas einzuspritzen, um in einer in die Abgasanlage integrierten Katalysatoranordnung eine selektive katalytische Reduktion zur Verringerung des Stickoxidgehalts im Abgas durchzuführen. Um dabei eine effiziente Durchmischung des Abgases mit dem in diese eingespritzten Reaktionsmittel zu erlangen, wird in die Abgasanlage stromabwärts der Reaktionsmitteleinspritzung und stromaufwärts der Katalysatoranordnung ein Mischer integriert, welcher mit einer Mehrzahl von schaufelartigen Strömungsablenkelementen eine Verwirbelung des in der Abgasanlage strömenden Abgases und somit eine Vermischung mit dem eingespritzten Reaktionsmittel bewirkt. Derartige Mischer sind im Allgemeinen so aufgebaut, dass sie grundsätzlich im Inneren von rohrartigen Abgasführungselementen der Abgasanlage aufgenommen sind und in ihrem radial äußeren Bereich daran getragen sind.

In Fig. 1 ist eine aus der nachveröffentlichten deutschen Patentanmeldung DE 10 2016 120 171.5 bekannte Abgasanlage für eine Fahrzeugbrennkraftmaschine allgemein mit 10 bezeichnet. Die Abgasanlage 10 weist in einem stromaufwärtigen Bereich 12 zwei aneinander anschließende, rohrartige Abgasführungselemente 14, 16 auf. Diese weisen in einem Angrenzungsbereich 18 jeweils einen flanschartigen Kopplungsabschnitt 20 bzw. 22 auf, in welchem diese beispielsweise durch die flanschartigen Kopplungsabschnitte 20, 22 durchgreifende Schraubbolzen miteinander fest verbunden sind. Zwischen den beiden flanschartigen Kopplungsbereichen 20, 22 ist ein nachfolgend noch detaillierter beschriebenes Trägerelement 24 einer allgemein mit 26 bezeichneten Mischerbaugruppe positioniert und somit vermittels der z.B. auch dieses durchgreifenden Schraubbolzen mit den beiden Abgasführungselementen 14, 16 bzw. deren flanschartigen Kopplungsabschnitten 20, 22 im Angrenzungsbereich 18 an der Abgasanlage 10 festgelegt.

Der Angrenzungsbereich 18 liegt stromabwärts einer Reaktionsmitteleinspritzanordnung, vermittels welcher ein Reaktionsmittel, beispielsweise eine Harnstoff/Wasser-Lösung, in den Abgasstrom eingespritzt werden kann. Stromabwärts des Angrenzungsbereichs 18, angrenzend an das Abgasführungselement 16, ist eine allgemein mit 28 bezeichnete Katalysatoranordnung vorgesehen, in welcher das Gemisch aus Abgas und Reaktionsmittel einer selektiven katalytischen Reduktion unterzogen wird, um somit den Stickoxidanteil im Abgas zu senken. Über ein weiteres Abgasführungselement 30 gelangt das Abgas zu einem Abgasschalldämpfer 32, aus welchem dieses beispielsweise über zwei Endrohre 34, 36 nach außen abgegeben wird.

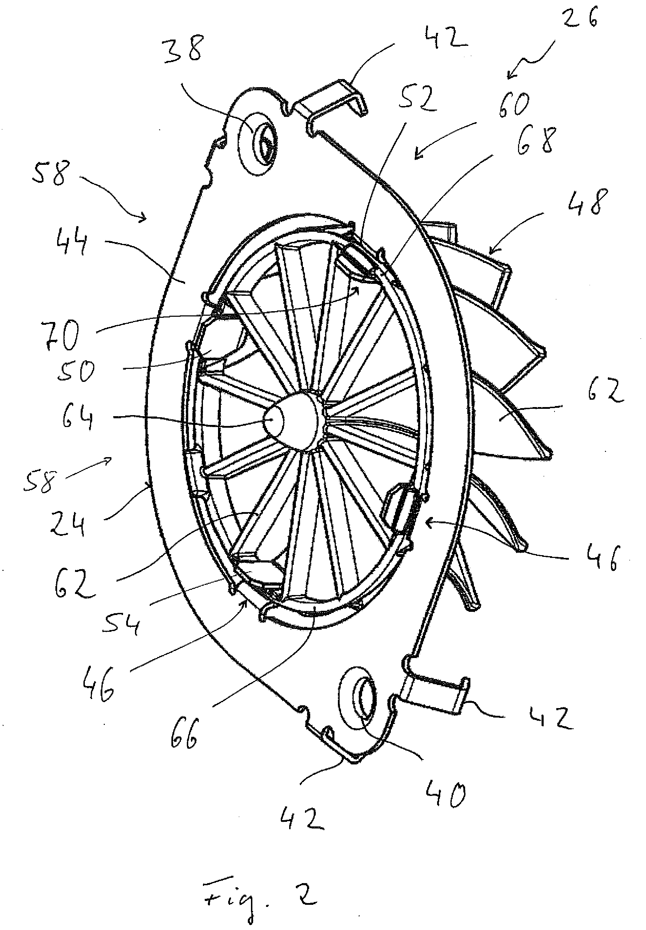

Die Fig. 2 zeigt in perspektivischer Ansicht die Mischerbaugruppe 26. Die Mischerbaugruppe 26 umfasst das bereits angesprochene vorzugsweise plattenartig ausgebildete Trägerelement 24, dessen Umfangskontur beispielsweise im Wesentlichen der Umfangskontur des flanschartigen Kopplungsabschnitts 22 entsprechen kann. Ebenso wie der flanschartige Kopplungsabschnitt 22 ist das vorzugsweise als Blechumformteil bereitgestellte und plattenartig ausgebildete Trägerelement 24 mit ringartiger Struktur ausgebildet und weist an zwei einander gegenüberliegenden Umfangsbereichen radiale Erweiterungen mit Öffnungen 38, 40 auf, durch welche hindurch die die beiden flanschartigen Kopplungsabschnitte 20, 22 und somit die Abgasführungselemente 14, 16 verbindenden Schraubbolzen geführt werden können.

Um das Trägerelement 24 bzw. die Mischerbaugruppe 26 als Vormontagebaugruppe mit dem Abgasführungselement 16 zusammenfassen zu können, weist das Trägerelement 24 beispielsweise in den beiden vorangehend angesprochenen Umfangsbereichen Fixierlaschen 42 auf, die so gebogen sind bzw. nach dem Positionieren der Mischeranordnung 26 am Abgasführungselement 16 gebogen werden, dass sie den flanschartigen Kopplungsabschnitt 22 hintergreifen und somit die Mischerbaugruppe 26 an diesem fixieren. Die so zusammengesetzte Baugruppe kann dann in einfacher Weise mit dem Abgasführungselement 14 zusammengesetzt werden, indem dessen flanschartiger Kopplungsabschnitt an den flanschartigen Kopplungsabschnitt 22 bzw. das Trägerelement 24 angesetzt und durch Verschraubung damit verbunden wird.

An einem Innenumfangsbereich eines allgemein mit 44 bezeichneten Trägerelementenkörpers des Trägerelements 24, von welchem Trägerelementenkörper 44 sich auch die Fixierlaschen 42 erstrecken, sind in vorzugsweise gleichmäßigem Umfangsabstand zueinander im dargestellten Ausgestaltungsbeispiel vier Gegen-Haltebereiche 46 vorgesehen, an welchen ein allgemein mit 48 bezeichneter Mischerkörper der Mischerbaugruppe 26 festgehalten ist. Jeder der Gegen-Haltebereiche 46 umfasst einen nach innen vorstehenden laschenartigen Halteabschnitt 50. Jeder laschenartige Halteabschnitt 50 ist im Wesentlichen mit U-förmiger Gestalt ausgebildet und weist einen äußeren U-Schenkel 52, einen inneren U-Schenkel 54 sowie einen diese verbindenden Verbindungsbereich auf. Die U-förmigen Halteabschnitte 50 sind so geformt, dass die Halteabschnitte 50 in Richtung zu einer erkennbaren Anströmseite 58 des Mischerkörpers 48, also in Richtung stromaufwärts, offen sind und zu einer verdeckten Abströmseite 60 des Mischerkörpers 48, also in Richtung stromabwärts, insbesondere durch den Verbindungsbereich abgeschlossen sind. Jeder der Halteabschnitte 50 ist im Wesentlichen hakenartig gestaltet und ermöglicht somit eine stabile Halterung des Mischerkörpers 48 am Trägerelement 24. Dabei erstreckt sich der U-Schenkel 52 ausgehend vom Trägerelementenkörper 44 im Wesentlichen in Richtung einer Mischerlängsachse und in Richtung auf die Abströmseite 60 des Mischerkörpers 48 zu, während der U-Schenkel 54 sich ausgehend vom Verbindungsbereich 56 im Wesentlichen parallel zum U-Schenkel 52 in Richtung auf die Anströmseite 58 des Mischerkörpers 48 zu erstreckt.

Der Mischerkörper 48 umfasst eine Mehrzahl von in Umfangsrichtung aufeinanderfolgenden und bezüglich der Mischerlängsachse L beispielsweise im Wesentlichen radial sich erstreckenden schaufelartigen Strömungsablenkelementen 62. Diese gehen von einem zentralen Körperbereich 64 des Mischerkörpers 48 aus und erstrecken sich nach radial außen bis zu einem vorzugsweise an der Anströmseite 58 an die Strömungsablenkelemente 62 anschließenden ringartigen Verbindungsbereich 66. Der Mischerkörper 48 kann mit dem zentralen Körperbereich 64, den schaufelartigen Strömungsablenkelementen 62 und dem ringartigen Verbindungsbereich 66 als ein integrales Bauteil, beispielsweise als Metallgussbauteil, bereitgestellt sein.

Der ringartige Verbindungsbereich 66 stellt in seinen zwischen den in Umfangsrichtungen unmittelbar aufeinanderfolgenden Strömungsablenkelementen 62 sich erstreckenden und diese miteinander verbindenden Bereichen jeweilige in Form eines Haltestegs 68 ausgebildete Haltebereiche 70 zur Zusammenwirkung jeweils mit einem Gegen-Haltebereich 46 des Trägerelements 24 bereit. Diese als Haltestege 68 ausgebildeten Haltebereiche 70 können in einen durch die U-förmigen Halteabschnitte 50 der Gegen-Haltebereiche 46 bereitgestellten Haltebereich-Aufnahmeraum 72 eingeführt werden, so dass die Halteabschnitte 50 einerseits die mit diesen zusammenwirkenden Haltebereiche 70 bezüglich der Mischerlängsachse L von radial außen nach radial innen übergreifen und die Haltebereiche 70 mit den inneren U-Schenkeln 54 auch in Richtung der Mischerlängsachse axial übergreifen. Die somit zumindest bereichsweise innerhalb der Haltebereich-Aufnahmeräume liegenden Haltestege 68 können sich somit in Richtung zur Abströmseite 60 des Mischerkörpers 48 nicht aus den Halteabschnitten 50 herausbewegen, sind also gegen übermäßige Axialbewegung gesichert, und sind durch Zusammenwirkung mit den inneren U-Schenkeln 54 im Wesentlichen auch radial zentriert. Somit ist eine definierte Positionierung des Mischerkörpers 48 bezüglich des Trägerelements 24 vorgegeben, wobei aufgrund der Ausgestaltung der Halteabschnitte 50 als durch Umformen von Blechmaterial in ihre gewünschte Form bringbare Laschen, die auch eine gewisse Flexibilität aufweisen, ein Ausgleich von Fertigungstoleranzen ermöglicht ist.

Der Mischerkörper 48 ist mit dem Trägerelement 24 im Bereich der Haltestege 68 bzw. der Halteabschnitte 50 durch Materialschluss, insbesondere durch Verschweißung 74, fest verbunden. Vorzugsweise stellt diese Verschweißung eine Verbindung zwischen den Haltestegen 68 und den inneren U-Schenkeln 54 her, wobei weiter vorzugsweise für eine über den Umfang gleichmäßig stabile Fixierung bei jedem der vier Gegen-Haltebereiche 46 der Mischerkörper 48 durch Verschweißung mit dem Trägerelement 24 materialschlüssig verbunden. Es könnten gleichwohl Gegen-Haltebereiche 46 vorgesehen sein, welche nur für eine Sicherung gegen übermäßige Axialbewegung, nicht aber für die Herstellung einer materialschlüssigen Verbindung genutzt werden. Ferner können Gegen-Haltebereiche und Haltebereiche vorgesehen sein, die nur für die Herstellung der materialschlüssigen Verbindung genutzt werden und bei welchen die Gegen-Haltebereiche nicht notwendigerweise die Haltebereiche radial übergreifen müssen.

Eine Mischerbaugruppe gemäß dem Oberbegriff des Anspruchs 1 ist aus der DE 20 2012 011 764 U1 bekannt. Bei dieser bekannten Mischerbaugruppe umfasst ein als Blechumformteil aufgebauter Mischerkörper eine Mehrzahl von in Umfangsrichtung aufeinander folgenden Strömungsablenkelementen. Radial außen ist an dem Mischerkörper ein Trägerbereich mit einer Mehrzahl von von dem Mischerkörper nach radial außen abgebogenen Laschen vorgesehen. Diese Laschen sind zwischen zwei plattenartigen Isolierelementen positioniert und zusammen mit den plattenartigen Isolierelementen zwischen zwei flanschartigen Kopplungsabschnitten zweier rohrartiger Abgasführungselemente gehalten.

Es ist die Aufgabe der vorliegenden Erfindung, eine Mischerbaugruppe bereitzustellen, welche in einfacher Art und Weise die Integration derselben in eine Abgasanlage ermöglicht.

Gemäß der vorliegenden Erfindung wird diese Aufgabe gelöst durch eine Mischerbaugruppe, insbesondere für eine Abgasanlage einer Fahrzeugbrennkraftmaschine, umfassend einen Mischerkörper mit einer Anströmseite und einer Abströmseite und einer Mehrzahl von Strömungsablenkelementen und einen bezüglich einer Mischerlängsachse radial außen an dem Mischerkörper vorgesehenen Trägerbereich. Für einen stabilen, einfach zu realisierenden Aufbau ist der Mischerkörper mit dem Trägerbereich einstückig, vorzugsweise als Gussbauteil, hergestellt. Der Trägerbereich weist einen Abgasführungselementen-Verbindungsbereich zur festen Anbindung an ein vorzugsweise rohrartiges Abgasführungselement und radial außerhalb des Abgangsführungselementen-Verbindungsbereichs einen flanschartigen Kopplungsabschnitt zur Kopplung mit einem flanschartigen Kopplungsabschnitt eines weiteren Abgasführungselements auf.

Bei dem erfindungsgemäßen Aufbau stellt die Mischerbaugruppe sowohl die Formation bereit, mit welcher diese an ein Abgasführungselement fest angebunden werden kann, als auch die Formation, mit welcher die Mischerbaugruppe bzw. ein daran fest angebundenes Abgasführungselement mit einem komplementären Kopplungsabschnitt eines weiteren Abgasführungselements fest und gasdicht gekoppelt werden kann. Dies verringert die zum Aufbau einer Abgasanlage erforderlichen Bauteile und die Anzahl der zum Zusammenbau einer Abgasanlage erforderlichen Arbeitsschritte.

Für eine stabile Anbindung an ein Abgasführungselement kann der Abgasführungselementen-Verbindungsbereich einen ringartigen, ein Abgasführungselement an seiner Außenseite axial übergreifend zu positionierenden Außen-Verbindungsbereich oder/und einen ringartigen, ein Abgasführungselement an seiner Innenseite axial übergreifend zu positionierenden Innen-Verbindungsbereich umfassen.

Dabei kann eine definierte Positionierung des Trägerbereichs bezüglich des Abgasführungselements dadurch unterstützt werden, dass zwischen dem Außen-Verbindungsbereich und dem Innen-Verbindungsbereich ein im Wesentlichen in Richtung der Mischerlängsachse in Richtung zur Abströmseite offener, ringartiger Abgasführungselementen-Aufnahmeraum gebildet ist.

Für eine gleichmäßige und insbesondere auch gasdichte Anbindung, beispielsweise durch Verschweißen, kann der Außen-Verbindungsbereich oder/und der Innen-Verbindungsbereich in Umfangsrichtung um die Mischerlängsachse unterbrechungsfrei umlaufend ausgebildet sein.

Auch der flanschartige Kopplungsabschnitt kann für eine stabile und gasdichte Anbindung an einen Kopplungsabschnitt eines weiteren Abgasführungselements in Umfangsrichtung um die Mischerlängsachse unterbrechungsfrei umlaufend ausgebildet sein.

Zur Unterstützung der Erzeugung einer die beiden miteinander zu koppelnd Kopplungsabschnitte beaufschlagenden, axial orientierten Kraft kann der flanschartige Kopplungsabschnitt eine in Richtung Abströmseite orientierte Kopplungselementenanlagefläche aufweisen.

Dabei kann beispielsweise vorgesehen sein, dass die Kopplungselementenanlagefläche von radial innen nach radial außen in Richtung von der Abströmseite weg geneigt ist, oder/und dass die Kopplungselementenanlagefläche als Kegelstumpffläche ausgebildet ist.

Für eine definierte Anlage der miteinander zu koppelnden Kopplungsabschnitte aneinander wird vorgeschlagen, dass der flanschartige Kopplungsabschnitt eine in Richtung von der Abströmseite weg orientierte Kopplungsabschnittanlagefläche zur Anlage an einem flanschartigen Kopplungsabschnitt eines weiteren Abgasführungselements aufweist.

Dabei kann eine radiale Zentrierung der beiden Kopplungsabschnitte bezüglich einander dadurch unterstützt werden, dass die Kopplungsabschnittanlagefläche von radial innen nach radial außen in Richtung von der Abströmseite weg geneigt ist, oder/und dass die Kopplungsabschnittanlagefläche als Kegelstumpffläche ausgebildet ist.

Für eine baulich stabile Ausgestaltung wird vorgeschlagen, dass die Kopplungselementenanlagefläche und die Kopplungsabschnittanlagefläche zueinander im Wesentlichen parallel sind.

Um eine von anderen Systembereichen nicht beeinträchtigte Kopplungswechselwirkung des Kopplungsabschnitts mit dem Kopplungsabschnitt eines weiteren Abgasführungselements zu ermöglichen, kann der flanschartige Kopplungsabschnitt bezüglich des Abgasführungselementen-Verbindungsbereichs in Richtung von der Abströmseite weg axial versetzt sein.

Die Erfindung betrifft ferner eine Abgasführungsbaugruppe, umfassend ein vorzugsweise rohrartiges Abgasführungselement und an einem axialen Endbereich des Abgasführungselements eine erfindungsgemäß aufgebaute Mischerbaugruppe.

Ein insbesondere auch gasdichter Anschluss kann dadurch erreicht werden, dass die Mischerbaugruppe mit ihrem Trägerbereich am axialen Endbereich des Abgasführungselements durch Verschweißen festgelegt ist.

Ferner betrifft die Erfindung eine Abgasanlage, insbesondere für eine Fahrzeugbrennkraftmaschine, umfassend eine mit einer erfindungsgemäßen Mischerbaugruppe aufgebaute Abgasführungsbaugruppe und ein weiteres vorzugsweise rohrartiges Abgasführungselement mit einem flanschartigen Kopplungsabschnitt. Dabei kann der flanschartige Kopplungsabschnitt der Abgasführungsbaugruppe mit dem flanschartigen Kopplungsabschnitt des weiteren Abgasführungselements durch ein diese wenigstens bereichsweise radial außen umgebendes und an ihren voneinander abgewandt orientierten Axialseiten nach radial innen übergreifendes Kopplungselement miteinander gekoppelt sein.

Um die Erzeugung einer die beiden flanschartigen Kopplungsabschnitte gegeneinander pressenden Kraft zu unterstützen, wird weiter vorgeschlagen, dass der flanschartige Kopplungsabschnitt des weiteren Abgasführungselements eine von radial innen nach radial außen in Richtung auf den flanschartigen Kopplungsabschnitt der Abgasführungsbaugruppe zu geneigte, vorzugsweise kegelstumpfartige Kopplungselementenanlagefläche aufweist.

Ferner kann das Kopplungselement einen die flanschartigen Kopplungsabschnitte aufnehmenden, von radial innen nach radial außen sich verjüngen Kopplungsabschnittaufnahmeraum aufweisen.

Für eine definierte, insbesondere auch selbstzentrierende Anlage der beiden Kopplungsabschnitte aneinander wird vorgeschlagen, dass der flanschartige Kopplungsabschnitt des weiteren Abgasführungselements eine von radial innen nach radial außen in Richtung von dem flanschartigen Kopplungsabschnitt der Abgasführungsbaugruppe weg geneigte, vorzugsweise kegelstumpfartige Kopplungsabschnittanlagefläche aufweist.

Die vorliegende Erfindung wird nachfolgend mit Bezug auf die beiliegenden Figuren detailliert beschrieben. Es zeigt:
- Fig. 1: eine aus dem Stand der Technik bekannte Abgasanlage einer Fahrzeugbrennkraftmaschine;
- Fig. 2: eine perspektivische Ansicht einer Mischerbaugruppe der Abgasanlage der Fig. 1;
- Fig. 3: eine perspektivische Ansicht einer erfindungsgemäß aufgebauten Mischerbaugruppe;
- Fig. 4: die Mischerbaugruppe der Fig. 3 in Verbindung mit einem rohrartigen Abgasführungselement;
- Fig. 5: eine Längsschnittansicht einer zwei rohrartige Abgasführungselemente und eine Mischerbaugruppe der Fig. 3 umfassenden Abgasanlage.

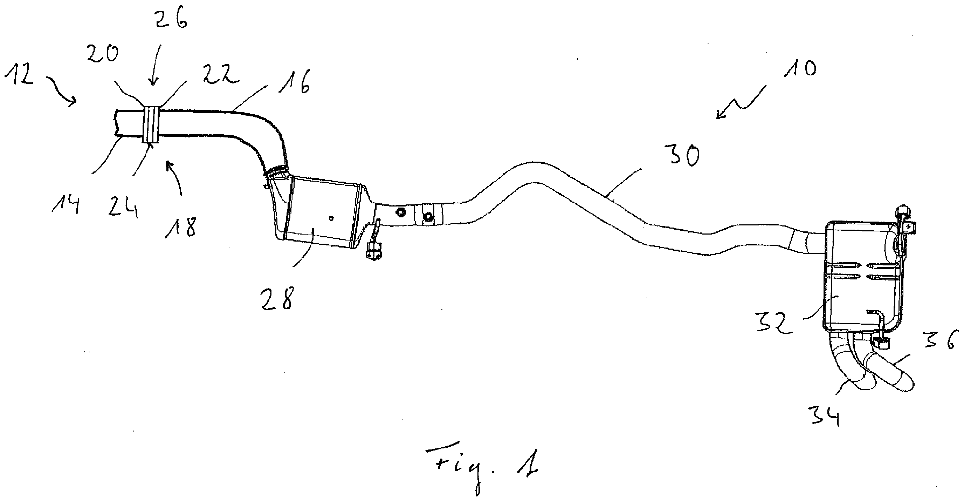

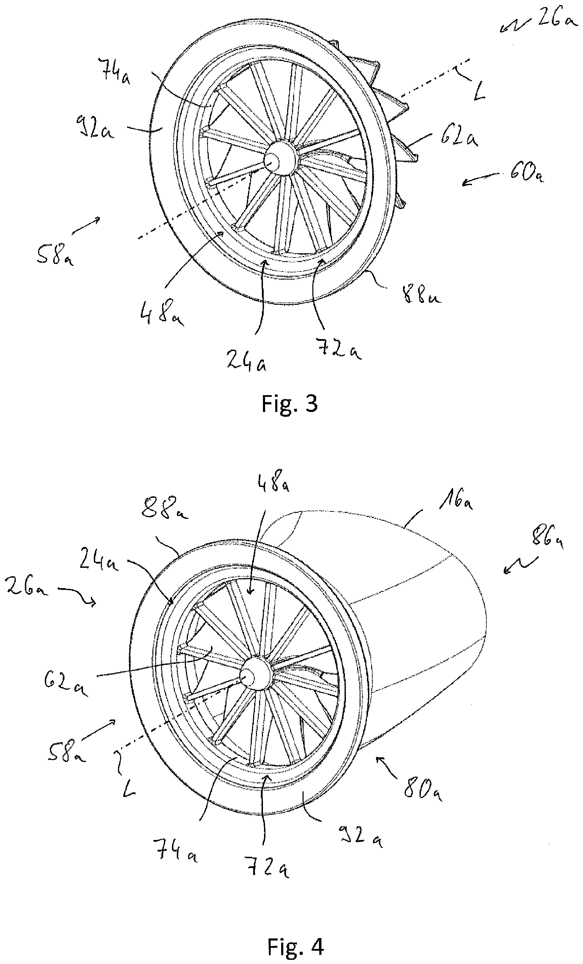

In den Fig. 3 - 5 ist eine gemäß den Prinzipien der vorliegenden Erfindung aufgebaute Mischerbaugruppe in Verbindung mit einem rohrartigen Abgasführungselement bzw. in eine Abgasanlage integriert dargestellt. In diesen Figuren sind Komponenten bzw. Systembereiche, welche vorangehend mit Bezug auf die Fig. 1 und 2 beschriebenen Komponenten bzw. Systembereiche hinsichtlich Aufbau bzw. Funktion entsprechen, mit den gleichen Bezugszeichen unter Hinzufügen des Anhangs "a" bezeichnet. Dabei ist insbesondere darauf hinzuweisen, dass der Mischerkörper 48a der erfindungsgemäß aufgebauten Mischerbaugruppe 26a hinsichtlich seiner baulichen Ausgestaltung mit den in Umfangsrichtung aufeinanderfolgenden, schaufelartigen Strömungsablenkelementen 62a dem vorangehend mit Bezug auf die Figur 2 beschriebenen Aufbau im Wesentlichen entspricht. Insofern kann diesbezüglich auch auf die voranstehenden Ausführungen zur Ausgestaltung des Mischerkörpers 48a verwiesen werden.

Bei dem erfindungsgemäßen Aufbau einer Mischerbaugruppe 26a schließt radial außen an den Mischerkörper 48a ein Integral, also einstückig damit ausgebildeter Trägerbereich 24a an. Dieser ersetzt das bei der vorangehend mit Bezug auf die Fig. 1 und 2 beschriebenen Ausgestaltung einer Mischerbaugruppe vorhandene und als separates Bauteil ausgebildete Trägerelement.

Der Trägerbereich 24a ist ringartig ausgebildet und umgibt die Mischerlängsachse L im Wesentlichen unterbrechungsfrei. In seinem radial Inneren, an den Mischerkörper 48a anschließenden Abschnitt stellt der Trägerbereich 24a einen Abgasführungselement-Verbindungsbereich 72a bereit. Dieser ringartig um die Mischerlängsachse L sich erstreckende Abgasführungselement-Verbindungsbereich 72a weist einen ringartigen Innen-Verbindungsbereich 74a auf, von welchem beispielsweise auch die in Umfangsrichtung aufeinanderfolgenden Strömungsablenkelemente 62a sich erstrecken können. In diesem Bereich ist also im Wesentlichen ein Übergang zwischen dem Mischerkörper 48a und dem Trägerbereich 24a bereitgestellt.

In radialem Abstand zu dem Innen-Verbindungsbereich 74a weist der Trägerbereich 24a einen Außen-Verbindungsbereich 76a auf. Zwischen dem Innen-Verbindungsbereich 74a und dem Außen-Verbindungsbereich 76a ist ein Abgasführungselementen-Aufnahmeraum 78a gebildet, der in Richtung der Mischerlängsachse L und in Richtung zur Abströmseite 60a des Mischerkörpers 48a offen ist. In den Abgasführungselementen-Aufnahmeraum 78a kann ein axialer Endbereich 80a des rohrartigen Abgasführungselements 16a eingeführt werden, so dass der Innen-Verbindungsbereich 74a den Endbereich 80a des Abgasführungselements 16a radial innen axial übergreift und der Außen-Verbindungsbereich 76a den Endbereich 80a des Abgasführungselements 16a radial außen axial übergreift. Für eine definierte Relativpositionierung kann das Abgasführungselement 16a mit seinem Endbereich 80a so weit in den Abgasführungselementen-Aufnahmeraum 78a eingeführt werden, dass es an einem diesen in axialer Richtung begrenzenden Bodenbereich 82a anstößt.

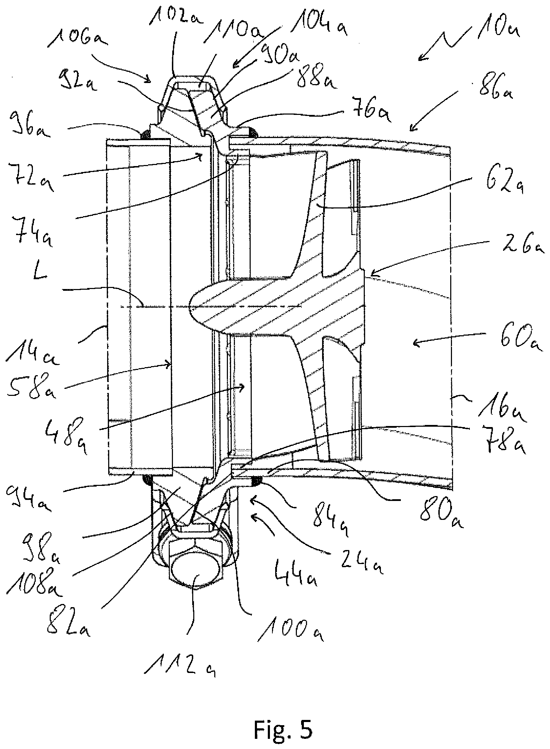

In dem in Fig. 5 auch erkennbaren Zustand, in welchem das Abgasführungselement 16a mit seinem Endbereich 80a in den Abgasführungselementen-Aufnahmeraum 78a eingeführt ist, und der Trägerbereich 24a bzw. die gesamte Mischerbaugruppe 26a definiert bezüglich des Abgasführungselements 16a positioniert ist, kann eine feste Verbindung zwischen diesen beiden Baugruppen durch Bilden einer in Umfangsrichtung um die Mischerlängsachse L vorzugsweise vollständig umlaufenden Schweißnaht 84a erreicht werden. Diese stellt gleichermaßen auch einen gasdichten Anschluss des Trägerbereichs 24a an das Abgasführungselement 16a sicher. Auf diese Art und Weise wird eine in Figur 4 erkennbare Abgasführungsbaugruppe 86a erhalten, welche das rohrartige Abgasführungselement 16a und die an dessen axialen Endbereich 80a angebundene Mischerbaugruppe 26a umfasst. Die Abgasführungsbaugruppe 86a kann beispielsweise ein zu einer Katalysatoranordnung oder einer sonstigen Abgasbehandlungsbaugruppe führendes Vorrohr oder dergleichen sein.

Zur stabilen Anbindung der Abgasführungsbaugruppe 86a an einen stromaufwärtigen Systembereich, beispielsweise das rohrartige Abgasführungselement 14a, welches ein von einem weiter stromaufwärts positionierten Systembereich der Abgasanlage 10a herführendes Rohr oder ein Rohrstutzen oder dergleichen sein kann, weist der Trägerbereich 24a der Mischerbaugruppe 26a ferner einen allgemein mit 88a bezeichneten flanschartigen Kopplungsabschnitt auf. Dieser ist bezüglich des Abgasführungselementen-Verbindungsbereichs 72a in Richtung der Mischerlängsachse L von der Abströmseite 60a weg versetzt und erstreckt sich im Wesentlichen radial außerhalb des Abgasführungselementen-Verbindungsbereichs 72a bzw. ausgehend von diesem nach radial außen. Der Kopplungsabschnitt 88a weist eine in Richtung zur Abströmseite 60a orientierte Kopplungselementanlagefläche 90a auf. Diese ist bezüglich der Mischerlängsachse L bzw. in einer dazu orthogonalen Ebene angestellt und weist eine beispielsweise kegelstumpfartige Kontur auf. Die Kopplungselementanlagefläche 90a erstreckt sich somit von radial innen nach radial außen in Richtung von der Abströmseite 60a weg.

An seiner der Kopplungselementanlagefläche 90a entgegengesetzten Axialseite weist der flanschartige Kopplungsabschnitt 88a eine Kopplungsabschnittanlagefläche 92a auf. Diese von der Abströmseite 60a somit wegorientierte Kopplungsabschnittanlagefläche 92a weist ebenfalls eine kegelstrumpfartige Formgebung auf und ist somit bezüglich der Mischerlängsachse L bzw. einer dazu orthogonalen Ebene angestellt, so dass sie sich von radial innen nach radial außen in Richtung von der Abströmseite 60a weg erstreckt. Beispielsweise kann der Anstellwinkel der Kopplungsabschnittanlagefläche 92a dem Anstellwinkel der Kopplungselementanlagefläche 90a entsprechen, so dass hier beispielsweise kegelstumpfartige Strukturen mit gleichem Kegelwinkel erhalten werden und die beiden Flächen 90a, 92a zueinander im Wesentlichen parallel sind. Grundsätzlich könnte auch eine von einer parallelen Anordnung abweichende, beispielsweise nach radial außen aufeinander zulaufende Geometrie dieser beiden Flächen bereitgestellt sein.

In Zuordnung zu dem weiteren Abgasführungselement 14a ist ein an einem axialen Endbereich 94a des Abgasführungselements 14a beispielsweise durch eine Schweißnaht 96a fest und gasdicht angebundener flanschartiger Kopplungsabschnitt 98a vorgesehen. Dieser weist in Zuordnung zu der Kopplungsabschnittanlagefläche 92a am Kopplungsabschnitt 88a des Trägerbereichs 24a eine in Richtung zur Abströmseite 60a des Mischerkörpers 26a orientierte Kopplungsabschnittanlagefläche 100a auf. Auch diese ist bezüglich der Mischerlängsachse L bzw. einer dazu orthogonalen Ebene angestellt und weist eine der Geometrie der Kopplungsabschnittanlagefläche 92a entsprechende Geometrie, also beispielsweise auch eine kegelstumpfartige Geometrie auf. Die beiden Kopplungsabschnittanlageflächen 92a, 100a gestatten somit eine die beiden Kopplungsabschnitte 98a, 88a bezüglich einander zentrierende, flächige und somit auch einen gasdichten Anschluss herstellende Anlage der beiden Kopplungsabschnitte 88a, 98a aneinander.

Um einen festen Zusammenhalt zu erzeugen, ist ein die beiden Kopplungsabschnitte 88a, 98a radial außen umgebendes Kopplungselement 102a vorgesehen. Dieses mit allgemein ringartiger Struktur aufgebaute Kopplungselement 102a übergreift die beiden Kopplungsabschnitte 88a, 98a an ihren voneinander abgewandt liegenden Axialseiten 104a, 106a, also an der Kopplungselementenanlagefläche 90a des Kopplungsabschnitts 88a und einer entsprechenden Kopplungselementenanlagefläche 108a des Kopplungsabschnitts 98a. Die Kopplungselementenanlagefläche 108a des Kopplungsabschnitts 98a ist bezüglich der Mischerlängsachse L bzw. einer dazu orthogonalen Ebene angestellt und zwar derart, dass sie sich von radial innen nach radial außen in Richtung zur Abströmseite 60a des Mischerkörpers 26a erstreckt. Auch hier kann beispielsweise eine kegelstumpfartige Geometrie für die Kopplungselementenanlagefläche 108a vorgesehen sein. Die beiden Kopplungselementenanlageflächen 90a, 108a bilden somit in dem in Figur 5 erkennbaren Querschnitt eine von radial innen nach radial außen sich verjüngende Struktur, welche in einen komplementär geformten Kopplungsabschnittaufnahmeraum 110a im Kopplungselement 102a eingreifend positioniert ist.

Das Kopplungselement 102a kann beispielsweise mit zwei gelenkig miteinander verbundenen Umfangsabschnitten ausgebildet sein, die in einem aneinander angrenzenden Umfangsbereich durch ein Verspannelement, beispielsweise eine Spannschraube 112a, in Umfangsrichtung aufeinander zu verspannt werden können und dabei eine nach radial innen gerichtete Kraft auf die beiden Kopplungsabschnitte 88a, 98a ausüben. Dadurch werden die beiden Kopplungsabschnitte 88a, 98a verstärkt axial gegeneinander gepresst, und im Bereich der gegenseitigen Anlage der Kopplungsabschnittanlageflächen 92a, 100a ein gasdichter Abschluss gewährleistet.

Bei dem erfindungsgemäßen Aufbau der Mischerbaugruppe 26a stellt diese mit dem Mischerkörper 48a einerseits den für eine effiziente Durchmischung von Abgas und weiter stromaufwärts eingedüstem Reaktionsmittel erforderliche Formation bereit, und stellt gleichermaßen mit dem Trägerbereich 24a die zum Integrieren in eine Abgasanlage aufgebaute Formation bereit, welche einerseits den Abgasführungselementen-Verbindungsbereich 72a und andererseits den flanschartigen Kopplungsabschnitt 88a umfasst. All diese Formationen bzw. Funktionsbereiche sind an ein- und derselben Baugruppe, welche wiederum als ein einziger Körper, also ein einziges Bauteil bereitgestellt ist, vorgesehen. Dieses Bauteil bzw. diese Baugruppe kann beispielsweise in einem Gussvorgang oder einem Sintervorgang aus Metallmaterial aufgebaut werden.

Es ist abschließend darauf hinzuweisen, dass, ohne von den Prinzipien der vorliegenden Erfindung abzuweichen, in der baulichen Ausgestaltung der Mischerbaugruppe verschiedenste Variationen vorgenommen werden können. So können beispielsweise die schaufelartigen Strömungsablenkelemente mit anderer Anzahl oder anderer Geometrie bereit gestellt sein. Insbesondere die Kopplungsabschnitte könnten auch so ausgestaltet sein, dass eine Verbindung der beiden den verschiedenen Abgasführungselementen zugeordneten Kopplungsabschnitte nicht durch ein diese radial außen umgebendes und übergreifendes Kopplungselement sondern durch im Wesentlichen axial eingeführte Schraubbolzen realisiert wird. In diesem Falle ist es vorteilhaft, wenn die beiden Kopplungsabschnitte an ihren voneinander abgewandten Axialseiten mit zur Mischerlängsachse L orthogonal, also nicht angestellten Flächen aufgebaut sind.

## Patentansprüche

1. Mischerbaugruppe, insbesondere für eine Abgasanlage einer Fahrzeugbrennkraftmaschine, umfassend einen Mischerkörper (48a) mit einer Anströmseite (58a) und einer Abströmseite (60a) und einer Mehrzahl von Strömungsablenkelementen (62a) und einen bezüglich einer Mischerlängsachse (L) radial außen an dem Mischerkörper (48a) vorgesehenen Trägerbereich (24a), wobei der Mischerkörper (48a) mit dem Trägerbereich (24a) einstückig hergestellt ist, **dadurch gekennzeichnet, dass** der Trägerbereich (24a) einen Abgasführungselementen-Verbindungsbereich (72a) zur festen Anbindung an ein vorzugsweise rohrartiges Abgasführungselement (16a) und radial außerhalb des Abgangsführungselementen-Verbindungsbereichs (72a) einen flanschartigen Kopplungsabschnitt (88a) zur Kopplung mit einem flanschartigen Kopplungsabschnitt (98a) eines weiteren Abgasführungselements (14a) aufweist.

2. Mischerbaugruppe nach Anspruch 1, **dadurch gekennzeichnet, dass** der Abgasführungselementen-Verbindungsbereich (72a) einen ringartigen, ein Abgasführungselement (16a) an seiner Außenseite axial übergreifend zu positionierenden Außen-Verbindungsbereich (76a) oder/und einen ringartigen, ein Abgasführungselement (16a) an seiner Innenseite axial übergreifend zu positionierenden Innen-Verbindungsbereich (74a) umfasst.

3. Mischerbaugruppe nach Anspruch 2, **dadurch gekennzeichnet,**
**dass** zwischen dem Außen-Verbindungsbereich (76a) und dem Innen-Verbindungsbereich (74a) ein im Wesentlichen in Richtung der Mischerlängsachse (L) in Richtung zur Abströmseite (60a) offener, ringartiger Abgasführungselementen-Aufnahmeraum (78a) gebildet ist,
oder/und
**dass** der Außen-Verbindungsbereich (76a) oder/und der Innen-Verbindungsbereich (74a) in Umfangsrichtung um die Mischerlängsachse (L) unterbrechungsfrei umlaufend ausgebildet ist.

4. Mischerbaugruppe nach einem der vorangehenden Ansprüche, **dadurch gekennzeichnet,**
**dass** der flanschartige Kopplungsabschnitt (88a) in Umfangsrichtung um die Mischerlängsachse (L) unterbrechungsfrei umlaufend ausgebildet ist, oder/und
**dass** der flanschartige Kopplungsabschnitt (88a) eine in Richtung Abströmseite (60a) orientierte Kopplungselementenanlagefläche (90a) aufweist.

5. Mischerbaugruppe nach Anspruch 4, **dadurch gekennzeichnet, dass** die Kopplungselementenanlagefläche (90a) von radial innen nach radial außen in Richtung von der Abströmseite (60a) weg geneigt ist, oder/und dass die Kopplungselementenanlagefläche (90a) als Kegelstumpffläche ausgebildet ist.

6. Mischerbaugruppe nach einem der vorangehenden Ansprüche, **dadurch gekennzeichnet, dass** der flanschartige Kopplungsabschnitt (88a) eine in Richtung von der Abströmseite (60a) weg orientierte Kopplungsabschnittanlagefläche (92a) zur Anlage an einem flanschartigen Kopplungsabschnitt (98a) eines weiteren Abgasführungselements (14a) aufweist
vorzugsweise wobei die Kopplungsabschnittanlagefläche (92a) von radial innen nach radial außen in Richtung von der Abströmseite (60a) weg geneigt ist, oder/und dass die Kopplungsabschnittanlagefläche (92a) als Kegelstumpffläche ausgebildet ist.

7. Mischerbaugruppe nach Anspruch 4 und Anspruch 6, **dadurch gekennzeichnet, dass** die Kopplungselementenanlagefläche (90a) und die Kopplungsabschnittanlagefläche (92a) zueinander im Wesentlichen parallel sind.

8. Mischerbaugruppe nach einem der vorangehenden Ansprüche, **dadurch gekennzeichnet,**
**dass** der flanschartigen Kopplungsabschnitt (88a) bezüglich des Abgasführungselementen-Verbindungsbereichs (72a) in Richtung von der Abströmseite (60a) weg axial versetzt ist
oder/und
**dass** der Mischerkörper (48a) mit dem Trägerbereich (24a) als Gussbauteil hergestellt ist.

9. Abgasführungsbaugruppe, umfassend ein vorzugsweise rohrartiges Abgasführungselement (16a) und an einem axialen Endbereich (80a) des Abgasführungselements (16a) eine Mischerbaugruppe (26a) nach einem der vorangehenden Ansprüche.

10. Abgasführungsbaugruppe nach Anspruch 9, **dadurch gekennzeichnet, dass** die Mischerbaugruppe (26a) mit ihrem Trägerbereich (24a) am axialen Endbereich (80a) des Abgasführungselements (16a) durch Verschweißen festgelegt ist.

11. Abgasanlage, insbesondere für eine Fahrzeugbrennkraftmaschine, umfassend eine Abgasführungsbaugruppe (86a) nach Anspruch 9 oder 10 und ein weiteres vorzugsweise rohrartiges Abgasführungselement (14a) mit einem flanschartigen Kopplungsabschnitt (98a).

12. Abgasanlage nach Anspruch 11, **dadurch gekennzeichnet, dass** der flanschartige Kopplungsabschnitt (88a) der Abgasführungsbaugruppe (86a) mit dem flanschartigen Kopplungsabschnitt (98a) des weiteren Abgasführungselements (14a) durch ein diese wenigstens bereichsweise radial außen umgebendes und an ihren voneinander abgewandt orientierten Axialseiten (104a, 106a) nach radial innen übergreifendes Kopplungselement (102a) miteinander gekoppelt sind.

13. Abgasanlage nach Anspruch 12, **dadurch gekennzeichnet, dass** der flanschartige Kopplungsabschnitt (98a) des weiteren Abgasführungselements (14a) eine von radial innen nach radial außen in Richtung auf den flanschartigen Kopplungsabschnitt (88a) der Abgasführungsbaugruppe (86a) zu geneigte, vorzugsweise kegelstumpfartige Kopplungselementenanlagefläche (108a) aufweist.

14. Abgasanlage nach Anspruch 13, **dadurch gekennzeichnet, dass** das Kopplungselement (102a) einen die flanschartigen Kopplungsabschnitte (88a, 98a) aufnehmenden, von radial innen nach radial außen sich verjüngen Kopplungsabschnittaufnahmeraum (110a) aufweist.

15. Abgasanlage nach Anspruch 12, 13 oder 14, **dadurch gekennzeichnet, dass** der flanschartige Kopplungsabschnitt (98a) des weiteren Abgasführungselements (14a) eine von radial innen nach radial außen in Richtung von dem flanschartigen Kopplungsabschnitt (88a) der Abgasführungsbaugruppe (86a) weg geneigte, vorzugsweise kegelstumpfartige Kopplungsabschnittanlagefläche (100a) aufweist.

## Claims

1. Mixer assembly unit, especially for an exhaust system of an internal combustion engine of a vehicle, comprising a mixer body (48a) with an inflow side (58a) and with an outflow side (60a) and with a plurality of flow deflection elements (62a), and a carrier area (24a) provided radially outwards in relation to the mixer longitudinal axis (L) at the mixer body (48a), wherein the mixer body (48a) is formed as one piece with the carrier area (24a), **characterized in that** the carrier area (24a) has an exhaust gas guide element connection area (72a) for a fixed connection to a preferably tubular exhaust gas guide element (16a) and, radially outside the exit guide element connection area (72a), a flange-like coupling section (88a) for coupling with a flange-like coupling section (98a) of another exhaust gas guide element (14a).

2. Mixer assembly unit in accordance with claim 1, **characterized in that** the exhaust gas guide element connection area (72a) comprises a ring-like outer connection area (76a) to be positioned such that it extends axially over an exhaust gas guide element (16a) on the outer side thereof or/and a ring-like inner connection area (74a) to be positioned such that it extends axially over an exhaust gas guide element (16a) on the inner side thereof.

3. Mixer assembly unit in accordance with claim 2, **characterized in that** a ring-like exhaust gas guide element receiving space (78a), which is open essentially in the direction of the mixer longitudinal axis (L) in the direction of the outflow side (60a), is formed between the outer connection area (76a) and the inner connection area (74a),
or/and
**in that** the outer connection area (76a) or/and the inner connection area (74a) is configured such that it extends circumferentially without interruption in the circumferential direction about the mixer longitudinal axis (L).

4. Mixer assembly unit in accordance with one of the preceding claims, **characterized in that**
the flange-like coupling section (88a) is configured such that it extends circumferentially in the circumferential direction without interruption about the mixer longitudinal axis (L),
or/and
**in that** the flange-like coupling section (88a) has a coupling element contact surface (90a) oriented in the direction of the outflow side (60a).

5. Mixer assembly unit in accordance with claim 4, **characterized in that** the coupling element contact surface (90a) is sloped from radially inwards to radially outwards in the direction away from the outflow side (60a), or/and that the coupling element contact surface (90a) is configured as a truncated cone surface.

6. Mixer assembly unit in accordance with one of the preceding claims, **characterized in that** the flange-like coupling section (88a) has a coupling section contact surface (92a) oriented in the direction away from the outflow side (60a) for contact with a flange-like coupling section (98a) of another exhaust gas guide element (14a), preferably wherein
the coupling section contact surface (92a) is sloped from radially inwards to radially outwards in the direction away from the outflow side (60a), or/and that the coupling section contact surface (92a) is configured as a truncated cone surface.

7. Mixer assembly unit in accordance with claim 4 and claim 6, **characterized in that** the coupling element contact surface (90a) and the coupling section contact surface (92a) are essentially parallel to one another.

8. Mixer assembly unit in accordance with one of the preceding claims, **characterized in that** the flange-like coupling section (88a) is offset axially in relation to the exhaust gas guide element connection area (72a) in the direction away from the outflow side (60a),
or/and
**in that** the mixer body (48a) is manufactured in one piece with the carrier area (24a), preferably as a cast component.

9. Exhaust gas guide assembly unit, comprising a preferably tubular exhaust gas guide element (16a) and, at an axial end area (80a) of the exhaust gas guide element (16a), a mixer assembly unit (26a) in accordance with one of the preceding claims.

10. Exhaust gas guide assembly unit in accordance with claim 9, **characterized in that** the mixer assembly unit (26a) is fixed with its carrier area (24a) at the axial end area (80a) of the exhaust gas guide element (16a) by welding.

11. Exhaust system, especially for an internal combustion engine of a vehicle, comprising an exhaust gas guide assembly unit (86a) in accordance with claim 9 or 10 and another, preferably tubular exhaust gas guide element (14a) with a flange-like coupling section (98a).

12. Exhaust system in accordance with claim 11, **characterized in that** the flange-like coupling section (88a) of the exhaust gas guide assembly unit (86a) is coupled with the flange-like coupling section (98a) of the other exhaust gas guide element (14a) by a coupling element (102a) enclosing these radially outwards in at least some areas and extending radially inwards over the axial sides (104a, 106a) thereof, which sides are oriented facing away from one another.

13. Exhaust system in accordance with claim 12, **characterized in that** the flange-like coupling section (98a) of the further exhaust gas guide element (14a) has a preferably truncated cone-like coupling element contact surface (108a) sloped from radially inwards to radially outwards in the direction of the flange-like coupling section (88a) of the exhaust gas guide assembly unit (86a).

14. Exhaust system in accordance with claim 13, **characterized in that** the coupling element (102a) has a coupling section receiving space (110a), which receives the flange-like coupling sections (88a, 98a) and tapers from radially inwards to radially outwards.

15. Exhaust system in accordance with claim 12, 13 or 14, **characterized in that** the flange-like coupling section (98a) of the further exhaust gas guide element (14a) has a preferably truncated cone-like coupling section contact surface (100a) sloped from radially inwards to radially outwards in the direction away from the flange-like coupling section (88a) of the exhaust gas guide assembly unit (86a).

## Revendications

1. Unité d'assemblage de mélangeur, en particulier pour un système d'échappement d'un moteur à combustion interne d'un véhicule, comprenant un corps de mélangeur (48a) avec un côté d'entrée (58a) et un côté de sortie (60a) et avec une pluralité d'éléments de déviation d 'écoulement (62a), et une zone de support (24a) prévue sur le corps de mélangeur (48a) radialement vers l'extérieur par rapport à l'axe longitudinal de mélangeur (L), le corps de mélangeur (48a) étant réalisé d'une seule pièce avec la zone de support (24a), **caractérisé en ce que** la zone de support (24a) présente une zone de raccordement d'élément de guidage des gaz d'échappement (72a) pour un raccordement fixe à un élément de guidage des gaz d'échappement (16a) de préférence tubulaire et, radialement à l'extérieur de la zone de raccordement d'élément de guidage des gaz d'échappement (72a), une section d'accouplement en forme de bride (88a) pour l'accouplement avec une section d'accouplement en forme de bride (98a) d'un autre élément de guidage des gaz d'échappement (14a).

2. Unité d'assemblage de mélangeur selon la revendication 1, **caractérisée en ce que** la zone de raccordement d'élément de guidage des gaz d'échappement (72a) comprend une zone de raccordement extérieure en forme d'anneau (76a) à positionner de telle sorte qu'elle s'étend axialement sur un élément de guidage des gaz d'échappement (16a) sur le côté extérieur de celui-ci ou/et une zone de raccordement intérieure en forme d'anneau (74a) à positionner de telle sorte qu'elle s'étend axialement sur un élément de guidage des gaz d'échappement (16a) sur le côté intérieur de celui-ci.

3. Unité d'assemblage de mélangeur selon la revendication 2, **caractérisée en ce qu'**entre la zone de raccordement extérieure (76a) et la zone de raccordement intérieure (74a) est formé un espace de réception d'élément de guidage des gaz d'échappement (78a) en forme d'anneau, ouvert essentiellement dans la direction de l'axe longitudinal de mélangeur (L) en direction du côté de sortie (60a),
ou/et
**en ce que** la zone de raccordement extérieure (76a) ou/et la zone de raccordement intérieure (74a) est adaptée de manière à s'étendre circonférentiellement sans interruption dans la direction circonférentielle autour de l'axe longitudinal de mélangeur (L).

4. Unité d'assemblage de mélangeur selon l'une des revendications précédentes, **caractérisée en ce que**
la section d'accouplement en forme de bride (88a) est adaptée de telle sorte qu'elle s'étend dans la direction circonférentielle sans interruption autour de l'axe longitudinal de mélangeur (L),
ou/et
**en ce que** la section d'accouplement en forme de bride (88a) présente une surface de contact d'élément d'accouplement (90a) orientée dans la direction du côté de sortie (60a).

5. Unité d'assemblage de mélangeur selon la revendication 4, **caractérisée en ce que** la surface de contact d'élément d'accouplement (90a) est inclinée de radialement à l'intérieur vers radialement à l'extérieur dans la direction opposée au côté de sortie (60a), ou/et **en ce que** la surface de contact d'élément d'accouplement (90a) est adaptée comme une surface tronconique.

6. Unité d'assemblage de mélangeur selon l'une des revendications précédentes, **caractérisée en ce que** la section d'accouplement en forme de bride (88a) présente une surface de contact de section d'accouplement (92a) orientée dans la direction opposée au côté de sortie (60a) pour le contact avec une section d'accouplement en forme de bride (98a) d'un autre élément de guidage des gaz d'échappement (14a), de préférence dans laquelle
la surface de contact de section d'accouplement (92a) est inclinée de radialement à l'intérieur vers radialement à l'extérieur dans la direction opposée au côté de sortie (60a), ou/et que la surface de contact de section d'accouplement (92a) est adaptée comme une surface tronconique.

7. Unité d'assemblage de mélangeur selon la revendication 4 et la revendication 6, **caractérisée en ce que** la surface de contact d'élément d'accouplement (90a) et la surface de contact de section d'accouplement (92a) sont essentiellement parallèles l'une à l'autre.

8. Unité d'assemblage de mélangeur selon l'une des revendications précédentes, **caractérisée en ce que** la section d'accouplement en forme de bride (88a) est décalée axialement par rapport à la surface de raccordement d'élément de guidage des gaz d'échappement (72a) dans la direction opposée au côté de sortie (60a),
ou/et
**en ce que** le corps du mélangeur (48a) est formé en une seule pièce avec la zone de support (24a), de préférence sous forme de composant moulé.

9. Unité de guidage des gaz d'échappement, comprenant un élément de guidage des gaz d'échappement (16a) de préférence tubulaire et, au niveau d'une zone d'extrémité axiale (80a) de l'élément de guidage des gaz d'échappement (16a), une unité de mélangeur (26a) selon l'une des revendications précédentes.

10. Unité de guidage des gaz d'échappement selon la revendication 9, **caractérisée en ce que** l'unité de mélange (26a) est fixée par soudage avec sa zone de support (24a) dans la zone d'extrémité axiale (80a) de l'élément de guidage des gaz d'échappement (16a).

11. Système d'échappement, en particulier pour un moteur à combustion interne d'un véhicule, comprenant une unité de guidage des gaz d'échappement (86a) selon la revendication 9 ou 10 et un autre élément de guidage des gaz d'échappement (14a), de préférence tubulaire, avec une section d'accouplement en forme de bride (98a).

12. Système d'échappement selon la revendication 11, **caractérisé en ce que** la section d'accouplement en forme de bride (88a) de l'unité de guidage des gaz d'échappement (86a) est accouplée à la section d'accouplement en forme de bride (98a) de l'autre élément de guidage des gaz d'échappement (14a) par un élément d'accouplement (102a) qui entoure ces derniers radialement vers l'extérieur dans au moins certaines zones et s'étend radialement vers l'intérieur sur ses côtés axiaux (104a, 106a), lesquels sont orientés à l'opposé l'un de l'autre.

13. Système d'échappement selon la revendication 12, **caractérisé en ce que** la section d'accouplement en forme de bride (98a) de l'autre élément de guidage des gaz d'échappement (14a) présente une surface de contact d'élément d'accouplement (108a), de préférence tronconique, inclinée de l'intérieur vers l'extérieur en direction de la section d'accouplement en forme de bride (88a) de l'unité de guidage des gaz d'échappement (86a).

14. Système d'échappement selon la revendication 13, **caractérisé en ce que** l'élément d'accouplement (102a) présente un espace de réception de section d'accouplement (110a), qui reçoit les sections d'accouplement en forme de bride (88a, 98a) et se rétrécit de radialement à l'intérieur vers radialement à l'extérieur.

15. Système d'échappement selon la revendication 12, 13 ou 14, **caractérisé en ce que** la section d'accouplement en forme de bride (98a) de l'autre élément de guidage des gaz d'échappement (14a) présente une surface de contact de section d'accouplement (100a), de préférence tronconique, qui est inclinée de radialement à l'intérieur vers radialement à l'extérieur dans la direction opposée à la section d'accouplement en forme de bride (88a) de l'unité de guidage des gaz d'échappement (86a).
